# EUROPÄISCHE PATENTSCHRIFT

(11) **EP 1 101 534 B1**
(45) Veröffentlichungstag und Bekanntmachung des Hinweises auf die Patenterteilung: **15.01.2003**
(21) Anmeldenummer: 00124198.3
(22) Anmeldetag: 08.11.2000
(51) Int. Cl.: B05B 1/24, B60S 1/52

(54) **Heizbare Düse für den Einsatz in Scheibenwaschanlagen**
Heated nozzle for use in screen washing devices
Buse chauffante pour dispositif lave-glace

(30) Priorität: 18.11.1999 DE 29920259 U
(43) Veröffentlichungstag der Anmeldung: 23.05.2001
(73) Patentinhaber: REHAU AG + Co, 95111 Rehau (DE)
(72) Erfinder: Rudlof, Manfred, Dr., 95111 Rehau (DE); Scheiterlein, Bernd, 95111 Rehau (DE)

(56) Entgegenhaltungen:
- EP-A- 0 353 643
- EP-A- 0 724 992
- GB-A- 2 250 218
- US-A- 4 815 769

## Beschreibung

Die Erfindung betrifft eine Vorrichtung für den Einsatz in Scheibenwaschanlagen und Scheinwerferreinigungsanlagen von Kraftfahrzeugen, wobei die Vorrichtung beheizbar ist, mit einer aus nicht leitendem polymeren Werkstoff bestehenden Außenhülle, die an ihrer Stirnseite eine Öffnung aufweist und einen in der Außenhülle positionierten heizbaren Einsatz aus einem elektrisch leitfähigen, polymeren Werkstoff, dessen Wandung wenigstens ein zur Öffnung führendes Lumen umschließt, wobei an dem heizbaren Einsatz Stromanschlußfahnen und Schlauchanschlußstutzen vorgesehen sind.

Aus der DE 84 31 147 ist eine derartige Vorrichtung bekannt. Bei dieser Vorrichtung ist der Düsenkörper aus einem elektrisch leitfähigen Kunststoff hergestellt, der sich bei Stromdurchfluß erwärmen soll.
Mit einer derartigen Vorrichtung sollen die Düsenkörper vor dem Einfrieren des durch die Vorrichtung transportierten Wassers bei Temperaturen unterhalb des Gefrierpunkte geschützt werden.

Bei der Anwendung derartiger Düsenkörper hat es sich jedoch gezeigt, daß die Materialanforderungen im täglichen Einsatz an Düsenkörper, welche aus einem elektrisch leitfähigen Kunststoff hergestellt werden, nicht erfüllbar sind.
Ein weiterer Nachteil derartiger Vorrichtungen wird darin gesehen, daß beim Durchleiten des Stromes von den Stromanschlußfahnen über den Düsenkörper Kriechströme entstehen, die durch das die Düse umgebende Karosserieblech nicht vermeidbar sind.

Eine weitere gattungsgemäße Vorrichtung ist in der DE 38 26 646 beschrieben.

Diese beheizbare Scheibenwaschanlagen-Düse ist aufgebaut aus einer Außenhülle, welche aus einem nicht leitenden Kunststoff besteht, an deren vorderen Ende die Spritzdüse vorgesehen ist, und einem in die Außenhülle einführbaren heizbaren Einsatz mit einem zur Spritzdüse führenden Wasserkanal, an dem Stromanschlußfahnen vorgesehen sind und der aus einem elektrisch leitfähigen Kunststoff besteht.
Bei Stromzufuhr über die Stromanschlußfahnen soll sich dieser Einsatz und damit der zur Spritzdüse führende Wasserkanal erwärmen und ein Festfrieren des Wassers verhindern.

Da der Stromfluß bekanntlich über die kürzest mögliche Distanz erfolgt, entsteht eine Erwärmung dieses Einsatzes nur in dem Bereich, der unmittelbar an die eingebrachten Stromanschlußfahnen angrenzt. Nachteiligerweise wird somit keine durchgehende Erwärmung des Einsatzes bis zur Ausströmöffnung realisiert und somit auch ein Einfrieren von Flüssigkeiten bei Temperaturen unterhalb des Gefrierpunktes nicht verhindert.

Ein weiterer Nachteil besteht darin, daß durch die örtl. Konzentration des Stromes auf einen kleinen Bereich sich dieser stärker erwärmt als der Einsatz insgesamt. Hierdurch entstehen unterschiedliche Spannungen bedingt durch unterschiedliche Wärmeausdehnungen im Einsatz selbst und in der Außenhülle.
Im schlimmsten Fall können derartige Stromkonzentrationen dazu führen, daß das Material des Einsatzes angeschmolzen bzw. aufgeschmolzen wird und somit die Vorrichtung unbrauchbar ist.
Hier setzt die Erfindung ein, die sich zur Aufgabe gestellt hat, die Nachteile des bekannten Stand der Technik zu verbessern und eine Vorrichtung aufzuzeigen, mit der eine zuverlässige und gleichmäßige Erwärmung gewährleistet ist, bei der der Wärmeübergang an das Medium optimiert ist und die wirtschaftlich und kostengünstig herstellbar ist.

Erfindungsgemäß wird dies dadurch gelöst, daß die das Lumen umgebende Wandung des heizbaren Einsatzes eine über ihre gesamte Länge gleichbleibende Wandstärke aufweist und daß in der Öffnung eine Spritzdüse drehbar gelagert ist, die vom oberen freien Ende des heizbaren Einsatzes beabstandet ist.

Damit wird vorteilhafterweise eine homogene Massenverteilung realisiert, welche zu einer thermodynamisch günstigen Ausführung der Vorrichtung führt. Die Ausnutzung der durch den Einsatz aufgenommenen elektrischen Energie und damit der Wirkungsgrad wird optimiert, da der medienführende Querschnitt selbst als Heizelement funktioniert.

Letztendlich wird die Wärmeübertragung an das durch das Lumen des Einsatzes transportierte Medium optimiert.

Ein weiterer Vorteil wird darin gesehen, daß durch die beabstandete Position der Spritzdüse zum Einsatz im drucklosen Zustand das Medium in diesem Zwischenraum verbleibt und damit die Spritzdüse nicht einfriert. Weiterhin kann vorteilhafterweise erreicht werden, daß durch das über den Einsatz erwärmte Medium die Spritzdüse nicht soweit erhitzt wird, daß es hier beispielsweise zu Kalkablagerungen oder sonstigen Verstopfungen der Vorrichtung begünstigenden Prozessen kommen kann.

Weiterhin vorteilhaft wird gesehen, daß eine mögliche unterschiedliche Wärmeausdehnung bei Verwendung von verschiedenen Materialien für die Spritzdüse und für den Einsatz, durch die beabstandete Position der Spritzdüse kompensiert werden kann.

Durch die erfindungsgemäße Vorrichtung, insbesondere durch den konstanten Querschnitt des Einsatzes, kann die Funktionsfähigkeit jederzeit gewährleistet werden und es treten in dem Einsatz keine lokalen Stromschwankungen auf, die das leitfähige, polymere Material des Einsatzes partiell stärker erwärmen können.
In einer weiteren Ausführungsform weist der Einsatz eine runde oder auch mehr eckige Außenkontur auf, welche nach den speziellen Erfordernissen der Vorrichtung, sowie den Anforderungen an die Leistung, die Energie und das Material des Einsatzes resultieren.

Weiterhin vorteilhaft wird gesehen, daß der heizbare Einsatz an seinem freien Ende eine Stromanschlußfahne und an dem gegenüberliegenden freien Ende eine Stromanschlußfahne aufweist, welche in die Wandung eingebracht sind. Hierdurch wird erreicht, daß in den Bereichen zwischen den Stromanschlußfahnen eine gleichmäßige Verteilung der elektrischen Energie realisiert wird, welche den Korpus des Einsatzes erwärmt, da dieser aus einem elektrisch leitfähigen polymeren Werkstoff mit beispielsweise Ruß-, Kohlefaser-, Metall-, Silbemitrat-Einlagerungen verstärkt ist und der demzufolge einen Ohmchen Widerstand bei Anlegen einer Spannung bildet.

In weiteren Ausführungsformen der Erfindung sind die Stromanschlußfahnen axial auf der Wandung des heizbaren Einsatzes aufgebracht. Auch hierdurch wird eine gleichmäßige und konstante Erwärmung des durch das Lumen des Einsatzes zu transportierenden Mediums realisiert. Ein weiterer Vorteil der Erfindung wird darin gesehen, daß es möglich ist, Vorrichtungen anzubieten, die einem heizbaren Einsatz haben, jedoch über ein oder mehrere Spritzdüsen verfügen, die jeweils von dem Einsatz beabstandet sind und von diesem mit den notwendigen Medien versorgt werden.

Die Erfindung lehrt weiter, daß die Stromanschlußfahnen durch die Wandung der Außenhülle aus der Vorrichtung herausgeführt werden, da nur so gewährleistet werden kann, daß eine gleichmäßige Erwärmung des Mediums durch den Einsatz erreicht wird.

Weiterhin vorteilhaft wird gesehen, daß die Stromanschlußfahnen in die Wandung des heizbaren Einsatzes eingebracht sind, da dadurch der Wirkungsgrad der einzubringenden Energie noch erhöht werden kann und durch die Querschnitte von Einsatz sowie Stromanschlußfahnen keine lokalen Spannungsspitzen auftreten.
Der heizbare Einsatz und die Außenhülle der Vorrichtung bestehen vorteilhafterweise aus dem gleichen bzw. ähnlich aufgebauten thermoplastischen Werkstoff. Hierdurch kann vermieden werden, daß durch unterschiedliche Materialeigenschaften zwischen dem heizbaren Einsatz und der Außenhülle Probleme auftreten, wie Spannungsrisse, unterschiedliche Wärmeausdehnung und ähnliches. Ein weiterer Vorteil wird darin gesehen, daß durch die Verwendung gleichartiger Werkstoffe, die sich nur durch die einzusetzenden Füllstoffe für den Einsatz unterscheiden, auch eine wirtschaftliche Fertigung für die Vorrichtung insgesamt realisiert ist. Es hat sich weiterhin als vorteilhaft herausgestellt, daß an einem freien Ende des heizbaren Einsatzes ein Schlauchanschlußstutzen anbringbar ist, auf dem der das Medium aus dem Vorratsbehälter transportierende Schlauch an der Vorrichtung befestigbar ist.
Dieser Schlauchanschlußstutzen kann mit dem heizbaren Einsatz einstückig verbunden sein, was die Herstellungskosten reduziert. Die Erfindung lehrt weiter, daß der Schlauchanschlußstutzen lösbar mit dem heizbaren Einsatz verbunden ist. Dies kann über Steck- bzw. Schlauchverbindungen erfolgen.

In einer weiteren vorteilhaften Ausführungsform weist der Schlauchanschlußstutzen wenigsten eine von seinem Außenumfang wegragende Abkragung auf, die eine Fixierung des Schlauches auch ohne zusätzliche Hilfsmittel wie Schlauchschellen oder Klemmen störungsfrei ermöglicht.

Im folgenden soll an einer die Erfindung nicht beschränkenden Abbildung diese näher erläutert werden.

Es zeigt:

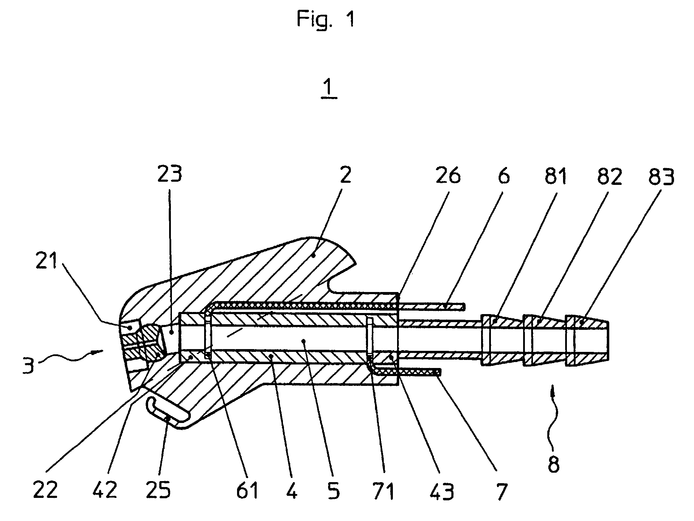

Figur 1 Schnittdarstellung durch eine erfindungsgemäße Vorrichtung.

in Figur 1 ist die erfindungsgemäße Vorrichtung (1) in Schnittansicht dargestellt. In die Außenhülle (2) sind Öffnungen (21, 22) eingebracht, wobei in der Öffnung (22) die Spritzdüse (3) drehbeweglich gelagert ist. Die Öffnung (21) wurde so dimensioniert, daß die Spritzdüse (3) in verschiedenen Positionen drehbeweglich fixierbar ist.
Ein Rasthaken (25) an der Außenhülle (2) dient der Befestigung der Vorrichtung (1) in einer Öffnung einer Motorhaube eines Karosseriebleches bzw. auch in einer Öffnung eines Stoßfängers für die Reinigung von Scheinwerfern. In der Außenhülle (2) ist der heizbare Einsatz (4) eingebracht, der durch den Zwischenraum (23) von der Spritzdüse (3) beabstandet ist. Am freien Ende (42) des heizbaren Einsatzes (4) ist die Stromanschlußfahne (6) und am freien Ende (43) des heizbaren Einsatzes (4) ist die Stromanschlußfahne (7) eingebracht. Die Stromanschlußfahnen (6, 7) werden in diesem Ausführungsbeispiel durch die Wandung der Außenhülle (2) nach außen geführt. Der Einsatz (4) besteht aus elektrisch leitfähigen polymeren Werkstoff, der beispielsweise mit Ruß-, Kohlefaser-, Metall- oder Silbernitrat-Einlagerungen beaufschlagt ist. Beim Anlegen einer Spannung an die Stromanschlußfahne (6 und 7) bildet der Einsatz zwischen den Stromeinleitungspunkten (61, 71) einen Ohmschen Widerstand und erwärmt sich bei Stromdurchfluß. Die Höhe der Erwärmung kann zum einen durch die Dimension des heizbaren Einsatzes (4), durch den Grad der Füllung des leitfähigen polymeren Werkstoffes, als auch durch die Höhe der angelegten Spannung dimensioniert werden. Durch die gleichmäßige Wandstärke des Einsatzes (4), der an diesem Ausführungsbeispiel eine runde Außenkontur hat, wird zwischen den Stromeinleitungspunkten (61,71), sowie im unmittelbaren Umfeld der Stromanschlußfahnen (6, 7) eine gleichmäßige und kontinuierliche Erwärmung des durch das Lumen (5) zu transportierenden Mediums realisiert. In einem weiteren Ausführungsbeispiel kann der heizbare Einsatz (4) auch eine mehreckige Kontur haben, so daß hier über die Raumform des heizbaren Einsatzes auch die an das Medium abzugebende Erwärmung dimensioniert werden kann. Am freien Ende (43) des heizbaren Einsatzes (4) ist in diesem Ausführungsbeispiel der Schlauchanschlußstutzen (8) angeformt. Der heizbare Einsatz (4) schließt in diesem Ausführungsbeispiel mit seinem freien Ende (43) an der Außenkontur (26) der Außenhülle (2) ab. Gegenüber der Außenkontur (26) der Außenhülle (2) weist der Schlauchanschlußstutzen (8) in diesem Ausführungsbeispiel (3) von seinem Außenumfang wegragende Abkragungen (81, 82, 83) auf, welche eine sichere Fixierung des des Medium transportierenden Schlauches, welcher hier nicht dargestellt ist, gewährleistet.

## Patentansprüche

1. Vorrichtung für den Einsatz in Scheibenwaschanlagen und Scheinwerferreinigungsanlagen von Kraftfahrzeugen, wobei die Vorrichtung beheizbar ist, mit einer aus nicht leitendem polymerem Werkstoff bestehenden Außenhülle (2), die an ihrer Stirnseite eine Öffnung (22) aufweist und einem in der Außenhülle (2) positionierten heizbaren Einsatz (4) aus einem elektrisch leitfähigen polymeren Werkstoff, dessen Wandung wenigstens ein zur Öffnung (22) führendes Lumen (5) umschließt, wobei an dem heizbaren Einsatz (4) Stromanschlußfahnen (6,7) und ein Schlauchanschlußstutzen (8) vorgesehen sind,
**dadurch gekennzeichnet,**
**daß** die das Lumen(5)umgebende Wandung des heizbaren Einsatzes (4) eine über ihre gesamte Länge gleichbleibende Wandstärke aufweist und daß in der Öffnung (22) eine Spritzdüse (3) drehbar gelagert ist, die vom oberen freien Ende (42) des heizbaren Einsatzes (4) beabstandet ist.

2. Vorrichtung nach Anspruch 1, **dadurch gekennzeichnet, daß** der heizbare Einsatz (4) an seinem freien Ende (42) eine erste Stromanschlußfahne (6) und an dem gegenüberliegenden freien Ende (43) eine zweite Stromanschlußfahne (7) in die Wandung eingebracht sind.

3. Vorrichtung nach einem der vorhergehenden Ansprüche, **dadurch gekennzeichnet, daß** die Stromanschlußfahnen (6, 7) axial auf der Wandung des heizbaren Einsatzes (4) aufgebracht sind.

4. Vorrichtung nach einem der vorhergehenden Ansprüche, **dadurch gekennzeichnet, daß** die Stromanschlußfahnen (6, 7) durch die Wandung der Außenhülle (2) aus der Vorrichtung herausgeführt werden.

5. Vorrichtung nach einem der vorhergehenden Ansprüche, **dadurch gekennzeichnet, daß** die Stromanschlußfahnen (6, 7) in die Wandung des heizbaren Einsatzes (4) eingebracht sind.

6. Vorrichtung nach einem der vorhergehenden Ansprüche, **dadurch gekennzeichnet, daß** der heizbare Einsatz (4) aus einem dem Werkstoff der Außenhülle (2) entsprechenden thermoplastischen Werkstoff besteht.

7. Vorrichtung nach einem der vorhergehenden Ansprüche, **dadurch gekennzeichnet, daß** am freien Ende (43) des heizbaren Einsatzes (4) ein Schlauchanschlußstutzen (8) angebracht ist.

8. Vorrichtung nach einem der vorhergehenden Ansprüche, **dadurch gekennzeichnet, daß** der Schlauchanschlußstutzen (8) wenigstens eine von seinem Außenumfang wegragende Abkragung (81) aufweist.

## Claims

1. Device for employment in windscreen washer systems and headlamp washer systems in motor vehicles, in which the device can be heated, is equipped with an outer sheath (2) made on non-conductive polymer material, has an opening (22) at its end and a heatable insert (4) made of an electrically conductive polymer material positioned in the outer sheath (2), whose walls encompass at least one lumen (5) leading to the opening (22), in which the heatable insert (4) is equipped with electrical shoe connectors (6,7) and a hose nipple (8), **characterised in that** the wall of the heatable insert (4) encircling the lumen (5) has an equal thickness over its entire length and that within the opening (22) a spray nozzle (3) is held in a rotating fitting at a distance from the upper free end (42) of the heatable insert (4).

2. Device according to claim 1, **characterised in that** the heatable insert (4) is equipped in the wall with a first electrical shoe connector (6) at its free end (42) and a second electrical shoe connector (7) at the opposing free end (43).

3. Device according to one of the above claims, **characterised in that** the electrical shoe connectors (6, 7) are installed axially on the wall of the heatable insert (4).

4. Device according to one of the above claims, **characterised in that** the electrical shoe connectors (6 , 7) project from the device through the wall of the outer sheath (2).

5. Device according to one of the above claims, **characterised in that** the electrical shoe connectors (6 ,7) are installed in the wall of the heatable insert (4).

6. Device according to one of the above claims, **characterised in that** the heatable insert (4) is made of a thermoplastic material equivalent to the outer sheath (2).

7. Device according to one of the above claims, **characterised in that** a hose nipple (8) is installed at the free end (43) of the heatable insert (4).

8. Device according to one of the above claims, **characterised in that** the hose nipple (8) is equipped with at least one spur (81) extending from its outer circumference.

## Revendications

1. Dispositif chauffant destiné aux lave-glaces et lave-phares de véhicules, constitué d'une enveloppe extérieure (2) en matériau polymère non conducteur, présentant à sa face avant une ouverture (22) et d'un insert chauffant (4) positionné dans l'enveloppe extérieure (2) en matériau polymère électroconducteur, dont la paroi entoure au moins un espace creux (5) menant à l'ouverture (22), des barrettes de connexion électrique (6, 7) et un embout raccordement (8) étant prévus sur l'insert chauffant (4), **caractérisé en ce que** la paroi de l'insert chauffant (4) entourant l'espace creux (5) présente une épaisseur constante sur toute sa longueur et que dans l'ouverture (22) une buse de pulvérisation (3) peut tourner sur son support et est écartée de l'extrémité libre supérieure (42) de l'insert chauffant (4).

2. Dispositif selon la revendication 1, **caractérisé en ce qu'**à l'extrémité libre (42) de l'insert chauffant (4) une première barrette de connexion électrique (6) et à l'extrémité libre opposée (43) une deuxième barrette de connexion électrique (7) sont insérées dans la paroi.

3. Dispositif selon l'une des revendications précédentes, **caractérisé en ce que** les barrettes de connexion électrique (6, 7) sont disposées en position axiale sur la paroi de l'insert chauffant (4).

4. Dispositif selon l'une des revendications précédentes, **caractérisé en ce que** les barrettes de connexion électrique (6, 7) sortent du dispositif par la paroi de l'enveloppe extérieure (2).

5. Dispositif selon l'une des revendications précédentes, **caractérisé en ce que** les barrettes de connexion électrique (6, 7) sont insérées dans la paroi de l'insert chauffant (4).

6. Dispositif selon l'une des revendications précédentes, **caractérisé en ce que** l'insert chauffant (4) est réalisé en matériau thermoplastique similaire au matériau de l'enveloppe extérieure (2).

7. Dispositif selon l'une des revendications précédentes, **caractérisé en ce qu'**un embout de raccordement de tuyau (8) est fixé à l'extrémité libre (43) de l'insert chauffant (4).

8. Dispositif selon l'une des revendications précédentes, **caractérisé en ce que** l'embout de raccordement de tuyau (8) présente au moins un épaulement (81) dépassant de sa périphérie.
